(19) Europäisches Patentamt
European Patent Office
Office européen des brevets

(11) Publication number: **0 648 797 A2**

(12) **EUROPEAN PATENT APPLICATION**

(21) Application number: **94307588.7**

(51) Int. Cl.$^6$: **C08G 75/02**

(22) Date of filing: **17.10.94**

(30) Priority: **19.10.93 JP 284370/93**

(43) Date of publication of application:
**19.04.95 Bulletin 95/16**

(84) Designated Contracting States:
**DE FR GB IT NL**

(71) Applicant: **KUREHA KAGAKU KOGYO KABUSHIKI KAISHA**
**1-9-11, Nihonbashi, Horidome-cho**
**Chuo-ku Tokyo 103 (JP)**

(72) Inventor: **Ichikawa, Yukio**
**131-7, Tsukimidai,**
**Kanayama-machi**
**Iwaka-shi, Fukushima-ken (JP)**
Inventor: **Kawasaki, Tatsuya**
**55-1, Sekishita,**
**Nishiki-machi**
**Iwaka-shi, Fukushima-ken (JP)**

(74) Representative: **Jones, Helen Marjorie Meredith et al**
**Gill Jennings & Every,**
**Broadgate House,**
**7 Eldon Street**
**London EC2M 7LH (GB)**

(54) **Production process of low-corrosive poly (arylene sulfide).**

(57) A process for the production of a low-corrosive poly(arylene sulfide), in which a poly(arylene sulfide) is subjected to an organic acid treatment in a liquid mixture composed of an organic solvent and water in a weight ratio ranging from 4 :1 to 1 :10, and containing an organic acid in a concentration of 0.1-5.0 wt.%, and the thus-treated poly(arylene sulfide) is then thoroughly washed, is provided. The poly(arylene sulfide) obtained by the process of the invention has high crystallization speed and excellent moulding and processing ability, and exhibits inhibited corrosiveness to metals.

EP 0 648 797 A2

## FIELD OF THE INVENTION

The present invention relates to a process for the production of a poly(arylene sulfide) high in crystallization speed and low in corrosiveness, and more particularly to a process for the production of a poly(arylene sulfide) which is good in molding and processing ability owning to its high crystallization speed, and exhibits inhibited corrosiveness to metals making up molds, processing machinery, metal parts of inserts and the like.

## BACKGROUND OF THE INVENTION

Poly(arylene sulfides) (hereinafter abbreviated as "PAS resins") such as poly(phenylene sulfide), poly(phenylene ketone sulfide) and poly(phenylene sulfone sulfide), which have both arylene groups and sulfide groups in their molecular chains, are engineering plastics excellent in heat resistance, mechanical properties, chemical resistance, flame retardance, electrical properties, molding and processing ability, and the like, and used in wide fields such as electrical and electronic equipments and parts, automotive machine parts, and chemical equipments and parts.

The PAS resins are resins relatively high in crystallization speed among thermoplastic resins and hence suitable for use in molding and processing such as injection molding. However, it is desired that their crystallization speed be more accelerated for the purpose of permitting the reduction of a molding cycle, the lowering of a mold temperature and the like. On the other hand, the PAS resins tend to form corrosive gases such as sulfur dioxide when heated to an elevated temperature, and hence involve problems that metallic portions of processing machines, molds and the like are corroded upon their molding and processing, or metal contacts, metal parts of inserts and the like in molded products are corroded. There is thus a demand for inhibiting their corrosiveness.

Various methods or processes have heretofore been proposed for accelerating the crystallization speed of the PAS resins. For example, it has been proposed to add an additive such as a plasticizer to a PAS resin (U.S. Patent No. 5,057,264). However, this method has involved a problem of corrosiveness attributable to the generation of gases derived from the additive, or deterioration in the mechanical properties and heat resistance of the PAS resin due to such an additive. There have also been proposed a process in which a high-boiling organic acid or organic acid anhydride is added to a PAS resin to heat the mixture, thereby obtaining a PAS resin composition having easy crystallizability (U.S. Patent No. 4,699,975) and a process in which a PAS resin is treated with a solution of a strong acid (U.S. Patent No. 4,769,426). However, the PAS resins obtained by these processes may exhibit corrosiveness in some cases.

As described above, the conventional treatments for accelerating the crystallization speed of the PAS resins have shown a tendency to strengthen their corrosiveness. There has hence been a demand for development of an effective process for obtaining a PAS resin which is high in crystallization speed and exhibits inhibited corrosiveness.

## OBJECTS AND SUMMARY OF THE INVENTION

It is an object of the present invention to provide a process for the production of a poly(arylene sulfide) which is high in crystallization speed and good in molding and processing ability, and exhibits inhibited corrosiveness to metals upon and after its molding.

The present inventors have carried out an extensive investigation with a view toward overcoming the above-described problems involved in the prior art. As a result, it has been found that when a PAS resin is subjected to an organic acid treatment in a liquid mixture composed of an organic solvent and water in a specific compositional ratio, and the thus-treated PAS resin is then thoroughly washed, the melt crystallization temperature (Tmc) of the PAS resin is raised and the crystallization speed is hence accelerated, and moreover the PAS resin can be provided as a low-corrosive resin.

This process requires neither addition of a special additive nor such a severe treatment that the PAS resin is brought to deterioration. The organic acid treatment may be performed at room temperature. Therefore, according to this process, both improvement in molding and processing ability and inhibition of corrosiveness can be achieved by a simple and easy treatment at a relatively low cost without impairing properties inherent in the PAS resin, such as high strength and good heat resistance.

The present invention has been led to completion on the basis of this finding.

According to the present invention, there is thus provided a process for the production of a low-corrosive poly(arylene sulfide), which comprises subjecting a poly(arylene sulfide) to an organic acid treatment in a liquid mixture composed of an organic solvent and water in a weight ratio of organic solvent to water ranging from 4:1 to 1:10, and containing an organic acid in a concentration of 0.1-5.0 wt.%, and then thoroughly washing

the thus-treated poly(arylene sulfide).

## DETAILED DESCRIPTION OF THE INVENTION

The features of the present invention will hereinafter be described in detail.

PAS resin:

The PAS resins useful in the practice of the present invention are not limited to poly(arylene sulfides) in a narrow sense, such as poly(phenylene sulfide), but widely include aromatic polymers having both arylene groups and sulfide groups in their molecular chains. Accordingly, the PAS resins may contain other groups in addition to the arylene groups and sulfide groups, for example, ketone groups, sulfone groups, ether groups, etc. in their main chains, and may also be copolymers such as random and block copolymers.

As specific examples of these PAS resins, may be mentioned poly(arylene sulfides) having predominant recurring units represented by the general formula (I):

$$-(\text{Ar-S})- \quad \text{(I)},$$

poly(arylene ketone sulfides) having predominant recurring units represented by the general formula (II):

$$-(\text{Ar-CO-Ar-S})- \quad \text{(II)},$$

poly(arylene ketone ketone sulfides) having predominant recurring units represented by the general formula (III):

$$-(\text{Ar-CO-Ar-CO-Ar-S})- \quad \text{(III)},$$

and poly(arylene sulfone sulfides) having predominant recurring units represented by the general formula (IV):

$$-(\text{Ar-SO}_2\text{-Ar-S})- \quad \text{(IV)}.$$

In the above formulae, Ar means an arylene group.

As exemplary arylene groups, may be mentioned a p-phenylene group, a m-phenylene group, a p,p'-biphenylene group, a naphthylene group, and substituted groups thereof, such as substituted phenylene groups. Exemplary substituent groups include alkyl or alkoxy groups having 1-6 carbon atoms, a phenyl group, a carboxyl group, a cyano group, an amino group, halogen atoms, etc. In the substituted arylene groups, one to four of these substituent groups are bonded to their aromatic rings.

These PAS resins may be generally obtained by reacting an alkali metal sulfide with a polyhalogenated aromatic compound such as a dihalogen-substituted aromatic compound in a polar organic solvent. This reaction is characterized by dehalogenation/sulfurization reaction, and alkali metal salts such as NaCl are formed as by-products.

The poly(arylene sulfides) in a narrow sense, which have predominant recurring units represented by the general formula (I) can be obtained, for example, as disclosed in U.S. Patent Nos. 4,645,826 and 3,919,177, etc., by polymerizing an alkali metal sulfide such as sodium sulfide and a dihalogen-substituted aromatic compound such as p-dichlorobenzene or m-dichlorobenzene under heat in a polar organic solvent such as N-methylpyrrolidone, if desired, in the presence of water and a polymerization aid. Upon the polymerization, a polyhalobenzene such as trichlorobenzene may be added to copolymerize it, thereby introducing a crosslinking. branched structure in their molecules.

A representative of such poly(arylene sulfides) is poly(p-phenylene sulfide) having predominant recurring units represented by the formula (V):

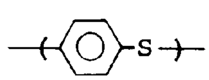

(V) .

As preferable examples of other PAS resins, may be mentioned random or block copolymers containing p-phenylene sulfide recurring units and m-phenylene sulfide recurring units.

The poly(arylene ketone sulfides) having predominant recurring units represented by the general formula (II) can be obtained, for example, as disclosed in U.S. Patent Nos. 4,895,925 and 4,886,871, by polymerizing an alkali metal sulfide and a dihalogen-substituted aromatic compound such as 4,4'-dichlorobenzophenone or 4,4'-dibromobenzophenone under heat in the presence of water in a polar organic solvent such as N-methylpyrrolidone.

The poly(arylene ketone ketone sulfides) having predominant recurring units represented by the general formula (III) can be obtained, for example, as disclosed in Japanese Patent Application Laid-Open No. 203929/1991, by reacting an alkali metal sulfide with a bis(halobenzoyl)benzene under heat in the presence of water in a polar organic solvent.

The poly(arylene sulfone sulfides) having predominant recurring units represented by the general formula (IV) can be obtained by reacting an alkali metal sulfide with 4,4'-dichlorodiphenyl sulfone in a polar organic solvent.

These PAS resins include not only homopolymers having recurring units of one kind, but also many kinds of copolymers having recurring units of plural kinds. As examples thereof, may be mentioned copolymers having recurring units represented by the general formula (I) and recurring units represented by the general formula (II) (U.S. Patent Nos. 5,120,808 and 5,288,815); copolymers having recurring units represented by the general formula (I) and recurring units represented by the general formula (III) (U.S. Patent Nos. 5,248,743 and 5,250,636); and copolymers having recurring units represented by the general formula (I) and recurring units represented by the general formula (IV). These copolymers include random and block copolymers. The PAS resins used in the present invention are not limited to the above-exemplified polymers, but widely include aromatic polymers having both arylene groups and sulfide groups in their molecular chains.

Of these PAS resins, a poly(p-phenylene sulfide) resin (PPS resin) is particularly preferred because it is excellent in processability and industrially available with ease. These PAS resins may be used either singly or in any combination thereof.

Organic acid:

As examples of the organic acid used in the organic acid treatment in the liquid mixture of an organic solvent and water according to the present invention, may be mentioned saturated fatty acids such as formic acid, acetic acid, propionic acid, butyric acid, valeric acid and capronic acid; unsaturated fatty acids such as acrylic acid, crotonic acid and oleic acid; aromatic carboxylic acids such as benzoic acid, phthalic acid and salicylic acid; dicarboxylic acids such as oxalic acid, maleic acid and fumaric acid; and sulfonic acids such as methanesulfonic acid and para-toluenesulfonic acid. In general, these organic acids may preferably be non-oxidizing. Of these organic acids, acetic acid and formic acid are particularly preferred. Inorganic acids such as hydrochloric acid are unsuitable for the object of the present invention because they have no inhibitory effect on corrosiveness, but rather tend to strengthen corrosiveness.

Organic solvent:

No particular limitation is imposed on the organic solvent used in the organic acid treatment in the liquid mixture of organic solvent/water according to the present invention so far as it does not decompose the PAS resin. As examples of the organic solvent, may be mentioned nitrogen-containing polar solvents such as N-methylpyrrolidone, dimethylformamide and dimethylimidazolidinone; ketone solvents such as acetone and methyl ethyl ketone; ether solvents such as diethyl ether, tetrahydrofuran and dioxane; halogenated hydrocarbon solvents such as chloroform and methylene chloride; alcoholic and phenolic solvents such as methanol, ethanol, ethylene glycol and phenol; aromatic hydrocarbon solvents such as benzene, toluene and xylene; sulfoxide and sulfone solvents such as dimethyl sulfoxide and sulfolane; and the like.

Although the liquid mixture may not be provided as an intimate mutual solution in some cases according to the kind of the organic solvent and the mixing composition of the organic solvent/water, the effect of the present invention is achieved so far as the mixture is mutually soluble at least in part. The liquid mixture is preferably a mutual solution because it is easy to handle, and the effect is also obtained with ease.

As particularly preferable organic solvents among the above solvents, may be mentioned acetone, methanol, ethanol, N-methylpyrrolidone, diethyl ether and chloroform.

Organic acid treatment:

According to the present invention, the PAS resin is subjected to an organic acid treatment in a liquid mixture composed of the organic solvent and water in a weight ratio ranging from 4:1 to 1:10, and containing the organic acid in a concentration of 0.1-5.0 wt.%.

No particular limitation is imposed on the form of the PAS resin to be treated, and the PAS resin may be in the form of a wet cake obtained by filtering a slurry containing a reaction mixture after completion of a polymerization reaction, or further washing and filtering the filter cake after the filtration, or powder or granules obtained by drying the wet cake. Therefore, the organic acid treatment may be performed as a step subsequent to the polymerization reaction in the production process of the PAS resin. However, the treatment may also be performed as a new step in which the PAS resin produced is dried once, and then treated. In general, it is more advantageous to perform the organic acid treatment as one step for a treatment of a crude polymer obtained in the production process of the PAS from the viewpoint of economy and treatment efficiency.

The organic acid treatment according to the present invention is preferably performed after at least part of an alkali metal halide (alkali metal salt) secondarily formed is removed after completion of the polymerization reaction. As exemplary methods for the removal of the alkali metal salt secondarily formed, may be mentioned sifting, centrifugation, washing with an organic solvent, washing with water and washing with a liquid mixture of an organic solvent and water. It is desirable that a PAS resin from which at least 50 wt.%, preferably at least 75 wt.%, more preferable at least 80 wt.% of the alkali metal salt has been removed by such a removing method be used as the PAS resin to be treated. The removal of the alkali metal salt secondarily formed can heighten the effect of the organic acid treatment according to the present invention.

When the organic acid treatment is performed during the production process of the PAS resin, it is generally preferable to conduct the treatment after washing the reaction product. As exemplary methods for the washing, may be mentioned (1) a method in which the reaction product is washed with an organic solvent, (2) a method in which the reaction product is washed with an organic solvent and then with water, (3) a method in which the reaction product is washed with water, (4) a method in which the reaction product is washed with water and then with an organic solvent, and (5) a method in which the reaction product is washed with a liquid mixture of an organic solvent and water.

In the present invention, the organic acid treatment of the PAS resin is performed in a liquid mixture of an organic solvent and water. The mixing ratio of the organic solvent to water ranges from 4:1 to 1:10, preferably from 3:1 to 1:8. If the mixing ratio is outside the above range, the melt crystallization temperature Tmc (which will be described subsequently) of the PAS resin obtained after the treatment cannot be raised if the organic solvent is too much, or water is too much, and hence the crystallization speed of the treated PAS resin cannot be significantly accelerated.

The concentration of the organic acid used in the organic acid treatment in the liquid mixture of the organic solvent and water according to the present invention is 0.1-5.0 wt.%, preferably 0.15-3.0 wt.% based on the total weight of the liquid mixture. If the concentration of the organic acid is less than 0.1 wt.%, the effect of the organic acid treatment is lessened. If the concentration exceeds 5.0 wt.% to the contrary, the effect to raise Tmc is lessened, and the inhibitory effect on corrosiveness is also lessened.

The organic acid treatment in the liquid mixture of the organic solvent and water according to the present invention is generally performed by immersing the PAS resin in the liquid mixture of the organic solvent and water, which contains the organic acid, and stirring the liquid mixture at 0-50°C for 1 minute to 10 hours. The treatment may be performed by pouring the PAS resin into the liquid mixture of the organic solvent and water, which contains the organic solvent. However, it is permissible to add water and/or the organic solvent to the PAS resin in the form of a wet cake, which has been obtained by washing and filtering the reaction product after completion of the polymerization reaction, and contains water and/or the organic solvent used in the washing, thereby preparing the liquid mixture of the organic solvent and water, having the above composition.

The organic acid treatment may be conducted under heat. However, according to the process of the present invention, it may be performed at 0-50°C, preferably 5-35°C, more preferably ordinary temperature of 10-30°C without particularly heating the organic solvent/water mixture containing the organic acid. No need of heating is economically advantageous in that the organic solvent low in boiling point is not vaporized out, and energy required for the heating can be saved.

The organic acid treatment may be performed by simply washing the PAS resin to be treated with the organic solvent/water mixture containing the organic acid. However, it is generally desirable from the viewpoint of effective treatment that the organic acid treatment be performed by stirring the liquid mixture, in which the PAS resin has been immersed, for about 1 minute to 10 hours, preferably about 5 minutes to 2 hours, more preferably about 10 minutes to 1 hour.

Washing after organic acid treatment:

In the production process according to the present invention, the PAS resin subjected to the organic acid treatment must be thoroughly washed. If no or insufficient washing is performed after the organic acid treatment, the effect to raise Tmc cannot be expected, and moreover the corrosiveness of the PAS resin shows a tendency to strengthen.

No particular limitation is imposed on the solvent used in the washing after the organic acid treatment so far as it neither decomposes nor oxidizes the PAS resin. However, a solvent having a low boiling point of 150°C or lower is preferred in view of solvent removal after the washing. As examples of representative solvents, may be mentioned water, acetone, methanol and ethanol.

The washing after the organic acid treatment is desirably performed until the concentration of the organic acid in the washing liquid used in the washing is generally 500 ppm or less, preferably 400 ppm or less, more preferably 100 ppm or less. The concentration of the organic acid in the washing liquid can be determined by

gas chromatography.

Low-corrosive PAS resin:

With respect to the PAS resins obtained in accordance with the production process of the present invention, the melt crystallization temperature Tmc is greatly raised as compared with crude PAS resins, and the metal corrosiveness is inhibited.

The crystallization properties of the PAS resin can be evaluated by its crystallization temperature Tmc. In general, a resin higher in a crystallization temperature (Tmc) when cooled from its molten state is higher in crystallization speed when cooled from the molten state and hence more suitable for use in injection molding. More specifically, the higher Tmc of the PAS resin means that the resin undergoes crystallization in a shorter period of time in the course of its cooling from the molten state. As shown in an example which will be described subsequently, in the case of a poly(phenylene sulfide) (PPS resin) by way of example, Tmc is raised by about 40°C according to the process of the present invention as compared with that of the crude polymer.

According to the process of the present invention, the PAS resin can be provided as a low-corrosive polymer even when subjected to the organic acid treatment to accelerate its crystallization speed.

ADVANTAGES OF THE INVENTION

According to the production process according to the present invention, there are provided PAS resins which are high in crystallization speed and good in molding and processing ability, and exhibit inhibited corrosiveness to metals upon and after its molding. The production process of this invention can be performed at relatively low cost, and does not impair excellent strength properties and heat resistance inherent in the PAS resins because it does not use such severe treatment conditions that the PAS resins are brought to deterioration.

EMBODIMENTS OF THE INVENTION

The present invention will hereinafter be described more specifically by the following examples and comparative examples. It should however be borne in mind that the present invention is not limited to the following examples only.

The following methods were followed for the evaluation of properties in the present invention.

<Evaluation methods of properties>

Metal corrosiveness and melt crystallization properties of PAS resins are evaluated in accordance with the following respective testing methods.

Testing method of corrosiveness:

A glass-made test tube having an external diameter of 21 mm and a length of 200 mm was charged with 4 g of a PAS resin sample. A stainless steel foil, SUS 304H (thickness: 50 μm, width: 18 mm, length: 160 mm) as a specimen for corrosion test is then placed in the test tube which is then closed with an open cell sponge stopper made of silicone rubber. Using a block bath (SSC-9100, manufactured by Senshu Kagaku K.K.), the test tube is heated for 3 hours at 280°C. After the heating treatment, the test tube is left over for about 12 hours at room temperature. Thereafter, the corroded condition of the specimen is visually observed. The metal corrosiveness of the PAS resins is evaluated in accordance with the following four ranks:

(Standard for judging metal corrosiveness):

A: No corrosion was observed;

B: Slight corrosion was observed;

C: Corrosion was observed; and

D: Considerable corrosion was observed.

Evaluation of crystallization properties:

An endothermic peak-temperature was defined as a melt crystallization temperature, Tmc, wherein said endothermic peak-temperature being determined by a differential scanning calorimeter (DSC) at a cooling rate of 10°C/min after about 10 mg of each samples was heated to 340°C in an inert gas atmosphere and then

held for 1 minute at 340°C. It is understood that a PAS resin having a higher Tmc is more accelerated in crystallization speed upon its cooling after melting.

Referential Example 1:

Polymerization of PPS:

A polymerizer was charged with 6700 g of N-methyl-2-pyrrolidone (NMP) and 3800 g of $Na_2S{\cdot}5H_2O$ (containing 46.24 wt.% of $Na_2S$). Thereafter, the contents were gradually heated to 200°C to distill off 1526 g of water, 1349 g of NMP and 0.56 mole of $H_2S$. After 96 g of water, 2885 g of NMP and 3293 g of p-dichlorobenzene were added to polymerize the reactants at 220°C for 4.5 hours, 447 g of water was additionally introduced to further polymerize them at 255°C for 5 hours.

PPS wet cake (PW-1):

After completion of the polymerization, the reaction mixture was cooled and sifted by a screen having a sieve opening of 150 μm to separate and collect the resulting particulate polymer, thereby obtaining a wet cake (PW-1) of PPS. The PPS content in this PPS wet cake (PW-1) was 40 wt.%.

PPS wet cake (PW-2):

A 500-ml glass beaker was charged with 100 g of the PPS wet cake (PW-1), to which 140 g of acetone was added to give a weight ratio of PPS to the liquid of 1/5. PPS was then washed under stirring at 23°C for 30 minutes. After the washing under stirring, a PPS wet cake (PW-2) having a PPS content of 50 wt.% was collected by filtration.

PPS wet cake (PW-3):

A 500-ml glass beaker was charged with 80 g of the PPS wet cake (PW-2), to which 160 g of acetone was added to give a weight ratio of PPS to the liquid of 1/5. PPS was then washed under stirring at 23°C for 30 minutes. After the washing under stirring, a PPS wet cake (PW-3) having a PPS content of 50 wt.% was collected by filtration. The NaCl content in this PPS wet cake (PW-3) was 20 wt.% or less of the total weight of NaCl formed in the polymerization reaction as determined by silver nitrate titration.

PPS wet cake (PW-4):

A 500-ml glass beaker was charged with 80 g of the PPS wet cake (PW-3), to which 160 g of deionized water was added to give a weight ratio of PPS to the liquid of 1/5. PPS was then washed under stirring at 23°C for 30 minutes. The same washing with deionized water was repeated additionally twice. After the washing under stirring, a PPS wet cake (PW-4) having a PPS content of 50 wt.% was collected by filtration. The NaCl content in this PPS wet cake (PW-4) was 10 wt.% or less of the total weight of NaCl formed in the polymerization reaction.

Example 1 and Comparative Example 1:

Using acetic acid as an organic acid, PPS in the PPS wet cake (PW-4) was subjected to an organic acid treatment. More specifically, 500-ml glass beakers were separately charged with 80 g of the PPS wet cake (PW-4). The amounts of water, acetone and acetic acid to be charged in each beaker were controlled in such a manner that a weight ratio of acetone to water was 2/1, a weight ratio of PPS to the liquid was 1/5, and a concentration of the organic acid in the liquid mixtures was in a proportion shown in Example 1-1, 1-2 or 1-3 of Table 1. Under these conditions, the liquid mixtures in the beakers were stirred at 23°C for 30 minutes to perform respective organic acid treatments. For the sake of comparison, the concentration of the organic acid was changed as shown in Comparative Examples 1-1, 1-2 and 1-3 of Table 1 to perform similar treatments.

After the treatments, PPS wet cakes were separately collected by filtration. The thus-obtained wet cakes were further submitted three times to a process of washing under stirring with deionized water and collection by filtration under conditions of PPS/liquid = 1/5 (by weight) and stirring time of 30 minutes at 23°C. Thereafter, the collected polymers were dried. The properties of the polymers thus obtained are shown in Table 1.

Table 1

| | Washing before treatment | Acetic acid treatment in organic solvent/water mixture | | | Washing after treatment | Tmc (°C) | Degree of corrosion |
|---|---|---|---|---|---|---|---|
| | Liquid added/number of times of washing (PPS wet cake No.) | Weight ratio of acetone/water | Concentration of acetic acid (wt.%) | Weight ratio of PPS/liquid | Liquid added/number of times of washing | | |
| Ex. 1-1 | Acetone/twice, deionized water/three times (PW-4) | 2/1 | 0.30 | 1/5 | Deionized water/three times | 242 | B |
| Ex. 1-2 | | 2/1 | 0.60 | | | 242 | B |
| Ex. 1-3 | | 2/1 | 4.00 | | | 240 | B |
| Comp. Ex. 1-1 | | 2/1 | 0.00 | | | 201 | A |
| Comp. Ex. 1-2 | | 2/1 | 0.06 | | | 199 | B |
| Comp. Ex. 1-3 | | 2/1 | 6.00 | | | 235 | C |

As apparent from the results shown in Table 1, it is understood that when the organic acid treatment in the liquid mixture of organic solvent/water according to the present invention is performed on PPS which has been washed with the organic solvent and then with water (Example 1-1, 1-2 or 1-3), PPS can be provided as a polymer high in Tmc and low in corrosiveness. On the other hand, when the organic acid is not used (Comparative Example 1-1), or the concentration of the organic acid is too low (Comparative Example 1-2), PPS can be only provided as a polymer low in Tmc. To the contrary, when the concentration of the organic acid is too high (Comparative Example 1-3), the corrosiveness of PPS cannot be inhibited. Therefore, PPS cannot be provided as a polymer high in Tmc and low in corrosiveness in either case.

Example 2 and Comparative Example 2:

500-ml Glass beakers were separately charged with 80 g of the PPS wet cake (PW-3) obtained in accordance with the process of Referential Example 1. The amounts of water, acetone and acetic acid to be charged in each beaker were controlled in such a manner that a weight ratio of acetone to water, a weight ratio of PPS to the liquid and a concentration of the organic acid were in their corresponding proportions shown in Table 2. Under these conditions, the liquid mixtures in the beakers were stirred at 23°C for 30 minutes to perform respective organic acid treatments. After the treatments, PPS wet cakes were separately collected by filtration. The thus-obtained wet cakes were further submitted three times to a process of washing under stirring with deionized water and collection by filtration under conditions of PPS/liquid = 1/5 (by weight) and stirring time of 30 minutes at 23°C. Thereafter, the collected polymers were dried. The properties of the polymers thus obtained are shown in Table 2.

Table 2

| | Washing before treatment | Acetic acid treatment in organic solvent/water mixture | | | Washing after treatment | Tmc (°C) | Degree of corrosion |
|---|---|---|---|---|---|---|---|
| | Liquid added/number of times of washing (PPS wet cake No.) | Weight ratio of acetone/water | Concentration of acetic acid (wt.%) | Weight ratio of PPS/liquid | Liquid added/number of times of washing | | |
| Ex. 2-1 | Acetone/twice (PW-3) | 2/1 | 0.30 | 1/5 | Deionized water/three times | 241 | B |
| Ex. 2-2 | | 1/2 | 0.30 | | | 241 | B |
| Ex. 2-3 | | 1/4 | 0.30 | | | 241 | B |
| Ex. 2-4 | | 2/1 | 0.60 | | | 242 | B |
| Comp. Ex. 2-1 | | 2/1 | 6.00 | | | 234 | C |
| Comp. Ex. 2-2 | | 1/2 | 6.00 | | | 233 | C |

As apparent from the results shown in Table 2, it is understood that when the organic acid treatment in the liquid mixture of organic solvent/water according to the present invention is performed on PPS which has been washed with the organic solvent (Example 2-1, 2-2, 2-3 or 2-4), PPS can be provided as a polymer high in Tmc and low in corrosiveness. On the other hand, when the concentration of the organic acid is too high (Comparative Example 2-1 or 2-2), PPS cannot be provided as a polymer combining high Tmc with low corrosiveness.

Example 3 and Comparative Example 3:

PPS wet cake (PW-5):

A 500-ml glass beaker was charged with 100 g of the PPS wet cake (PW-3) obtained in accordance with the process of Referential Example 1, to which water and acetone were added under control to give weight ratios of PPS to the liquid of 1/5 and acetone to water of 3/1. Under these conditions, PPS was washed under stirring at 23°C for 30 minutes and then collected by filtration. Washing under stirring was repeated under the same conditions to perform the washing with the liquid mixture of acetone/water twice in total. After the washing under stirring, a PPS wet cake (PW-5) having a PPS content of 50 wt.% was collected by filtration. The NaCl content in this PPS wet cake (PW-5) was 18 wt.% or less of the total weight of NaCl formed in the polymerization reaction.

Organic acid treatment:

500-ml Glass beakers were separately charged with 80 g of the PPS wet cake (PW-5) obtained above. The amounts of water, acetone and acetic acid to be charged in each beaker were controlled in such a manner that a weight ratio of acetone to water, a weight ratio of PPS to the liquid and a concentration of the organic acid were in their corresponding proportions shown in Table 3. Under these conditions, the liquid mixtures in the beakers were stirred at 23°C for 30 minutes to perform respective organic acid treatments. After the treatments, PPS wet cakes were separately collected by filtration. The thus-obtained wet cakes were further submitted three times to a process of washing under stirring with deionized water and collection by filtration under conditions of PPS/liquid = 1/5 (by weight) and stirring time of 30 minutes at 23°C. Thereafter, the collected polymers were dried. The properties of the polymers thus obtained are shown in Table 3.

Table 3

| | Washing before treatment | Acetic acid treatment in organic solvent/water mixture | | | Washing after treatment | | |
|---|---|---|---|---|---|---|---|
| | Liquid added/number of times of washing (PPS wet cake No.) | Weight ratio of acetone/water | Concentration of acetic acid (wt.%) | Weight ratio of PPS/liquid | Liquid added/number of times of washing | Tmc (°C) | Degree of corrosion |
| Ex. 3-1 | Acetone/twice, acetone/water (=3/1)/twice (PW-5) | 4/1 | 0.30 | 1/5 | Deionized water/three times | 241 | B |
| Ex. 3-2 | | 1/4 | 0.10 | | | 241 | B |
| Ex. 3-3 | | 1/4 | 0.20 | | | 241 | B |
| Ex. 3-4 | | 1/4 | 0.30 | | | 242 | B |
| Comp. Ex. 3-1 | | 5/1 | 0.30 | | | 220 | B |
| Comp. Ex. 3-2 | | 1/4 | 0.05 | | | 211 | B |

As apparent from the results shown in Table 3, it is understood that when the organic acid treatment in the liquid mixture of organic solvent/water according to the present invention is performed on PPS which has been washed with the liquid mixture of organic solvent/water (Example 3-1, 3-2, 3-3 or 3-4), PPS can be provided as a polymer high in Tmc and low in corrosiveness. On the other hand, when the proportion of the organic solvent in the liquid mixture is too high (Comparative Example 3-1), or the concentration of the organic acid is too low (Comparative Example 3-2), PPS can be only provided as a polymer low in Tmc.

Example 4 and Comparative Example 4:

PPS wet cake (PW-6):

A 500-ml glass beaker was charged with 80 g of the PPS wet cake (PW-3) obtained in accordance with the process of Referential Example 1, to which 160 g of deionized water was added to give a weight ratio of PPS to the liquid of 1/5. PPS was then washed under stirring at 23°C for 30 minutes. After the washing under stirring, a PPS wet cake (PW-6) having a PPS content of 50 wt.% was collected by filtration. The NaCl content in this PPS wet cake (PW-6) was 18 wt.% or less of the total weight of NaCl formed in the polymerization reaction.

Organic acid treatment:

500-ml Glass beakers were separately charged with 80 g of the PPS wet cake (PW-6) obtained above. The amounts of water, acetone and acetic acid to be charged in each beaker were controlled in such a manner that a weight ratio of acetone to water, a weight ratio of PPS to the liquid and a concentration of the organic acid were in their corresponding proportions shown in Table 4 (Example 4-1, 4-2 or 4-3). Under these conditions, the liquid mixtures in the beakers were stirred at 23°C for 30 minutes to perform respective organic acid treatments. After the treatments, PPS wet cakes were separately collected by filtration. The thus-obtained wet cakes were further submitted three times to a process of washing under stirring with deionized water and collection by filtration under conditions of PPS/liquid = 1/5 (by weight) and stirring time of 30 minutes at 23°C. Thereafter, the collected polymers were dried. The properties of the polymers thus obtained are shown in Table 4.

For the sake of comparison, with respect to cases where a weight ratio of acetone to water was 1/20 (Comparative Example 4-1) and where hydrochloric acid was used in place of acetic acid (Comparative Examples 4-2 and 4-3) as shown in Table 4, respective acid treatments under stirring were performed at 23°C for 30 minutes under their corresponding conditions shown in Table 4. After the treatments, PPS wet cakes were separately collected by filtration. The thus-obtained wet cakes were further submitted three times to a process of washing under stirring with deionized water and collection by filtration under conditions of PPS/liquid = 1/5 (by weight) and stirring time of 30 minutes at 23°C. Thereafter, the collected polymers were dried. The properties of the polymers thus obtained are shown in Table 4.

Table 4

| | Washing before treatment | Acid treatment in organic solvent/water mixture | | | Washing after treatment | Tmc (°C) | Degree of corrosion |
|---|---|---|---|---|---|---|---|
| | Liquid added/number of times of washing (PPS wet cake No.) | Weight ratio of organic solvent/water | Acid, concentration of acid (wt.%) | Weight ratio of PPS/liquid | Liquid added/ number of times of washing | | |
| Ex. 4-1 | Acetone/twice, deionized water/ once (PW-6) | Acetone/water 1/4 | Acetic acid 0.30 | 1/6 | Deionized water/ three times | 242 | B |
| Ex. 4-2 | | Acetone/water 1/8 | Acetic acid 0.30 | | | 240 | B |
| Ex. 4-3 | | Acetone/water 1/10 | Acetic acid 0.30 | | | 240 | B |
| Comp. Ex. 4-1 | | Acetone/water 1/20 | Acetic acid 0.30 | | | 229 | B |
| Comp. Ex. 4-2 | | Acetone/water 1/4 | Hydrochloric acid 0.30 | | | 242 | C |
| Comp. Ex. 4-3 | | Acetone/water 1/6 | Hydrochloric acid 4.00 | | | 242 | D |

As apparent from the results shown in Table 4, it is understood that when the organic acid treatment in the liquid mixture of organic solvent/water according to the present invention is performed on PPS which has been washed with the organic solvent and then with water (Example 4-1, 4-2 or 4-3), PPS can be provided as a polymer high in Tmc and low in corrosiveness. On the other hand, when the proportion of water in the liquid mixture is too high (Comparative Example 4-1), PPS cannot be provided as a polymer high in Tmc, and when an inorganic acid, hydrochloric acid, was used in the acid treatment (Comparative Example 4-2 or 4-3), PPS can be only provided as a polymer high in corrosiveness.

Example 5 and Comparative Example 5:

PPS wet cake (PW-7):

A 500-ml glass beaker was charged with 100 g of the PPS wet cake (PW-3) obtained in accordance with the process of Referential Example 1, to which 140 g of methanol was added to give a weight ratio of PPS to the liquid of 1/5. PPS was then washed under stirring at 23°C for 30 minutes. After the washing under stirring, a PPS wet cake having a PPS content of 50 wt.% was collected by filtration.

A 500-ml glass beaker was charged with 80 g of the PPS wet cake obtained above, to which 160 g of methanol was added to give a weight ratio of PPS to the liquid of 1/5. PPS was then washed under stirring at 23°C for 30 minutes. After the washing under stirring, a PPS wet cake (PW-7) having a PPS content of 50 wt.% was collected by filtration. The NaCl content in this PPS wet cake (PW-7) was 20 wt.% or less of the total weight of NaCl formed in the polymerization reaction.

PPS wet cake (PW-8):

A PPS wet cake (PW-8) was prepared in accordance with the same washing procedure as in the preparation of the wet cake (PW-7) except that NMP was used in place of methanol. The NaCl content in this PPS wet cake (PW-8) was 20 wt.% or less of the total weight of NaCl formed in the polymerization reaction.

PPS wet cake (PW-9):

A PPS wet cake (PW-9) was prepared in accordance with the same washing procedure as in the preparation of the wet cake (PW-7) except that diethyl ether was used in place of methanol. The NaCl content in this PPS wet cake (PW-8) was 20 wt.% or less of the total weight of NaCl formed in the polymerization reaction.

Organic acid treatment:

(Examples 5-1 and 5-2)

500-ml Glass beakers were separately charged with 80 g of the PPS wet cake (PW-3) obtained in Referential Example 1. The amounts of water, acetone and acetic acid to be charged in each beaker were controlled in such a manner that a weight ratio of acetone to water, a weight ratio of PPS to the liquid and a concentration of the organic acid were in their corresponding proportions shown in Table 5 (Example 5-1 or 5-2). Under these conditions, the liquid mixtures in the beakers were stirred at 23°C for 30 minutes to perform respective organic acid treatments. After the treatments, PPS wet cakes were separately collected by filtration. The thus-obtained wet cakes were further submitted three times to a process of washing under stirring with deionized water and collection by filtration under conditions of PPS/liquid = 1/5 (by weight) and stirring time of 30 minutes at 23°C. Thereafter, the collected polymers were dried.

(Examples 5-3 and 5-4)

500-ml Glass beakers were separately charged with 80 g of the PPS wet cake (PW-7). The amounts of water, methanol and acetic acid to be charged in each beaker were controlled in such a manner that a weight ratio of methanol to water, a weight ratio of PPS to the liquid and a concentration of the organic acid were in their corresponding proportions shown in Table 5 (Example 5-3 or 5-4). Under these conditions, the liquid mixtures in the beakers were stirred at 23°C for 30 minutes to perform respective organic acid treatments. After the treatments, PPS wet cakes were separately collected by filtration. The thus-obtained wet cakes were further submitted three times to a process of washing under stirring with deionized water and collection by filtration under conditions of PPS/liquid = 1/5 (by weight) and stirring time of 30 minutes at 23°C. Thereafter, the

collected polymers were dried.

(Examples 5-5 and 5-6)

500-ml Glass beakers were separately charged with 80 g of the PPS wet cake (PW-8). The amounts of water, NMP and acetic acid to be charged in each beaker were controlled in such a manner that a weight ratio of NMP to water, a weight ratio of PPS to the liquid and a concentration of the organic acid were in their corresponding proportions shown in Table 5 (Example 5-5 or 5-6). Under these conditions, the liquid mixtures in the beakers were stirred at 23°C for 30 minutes to perform respective organic acid treatments. After the treatments, PPS wet cakes were separately collected by filtration. The thus-obtained wet cakes were further submitted three times to a process of washing under stirring with deionized water and collection by filtration under conditions of PPS/liquid = 1/5 (by weight) and stirring time of 30 minutes at 23°C. Thereafter, the collected polymers were dried.

(Examples 5-7 and 5-8)

500-ml Glass beakers were separately charged with 80 g of the PPS wet cake (PW-9). The amounts of water, diethyl ether and acetic acid to be charged in each beaker were controlled in such a manner that a weight ratio of diethyl ether to water, a weight ratio of PPS to the liquid and a concentration of the organic acid were in their corresponding proportions shown in Table 5 (Example 5-7 or 5-8). Under these conditions, the liquid mixtures in the beakers were stirred at 23°C for 30 minutes to perform respective organic acid treatments. After the treatments, PPS wet cakes were separately collected by filtration (the filterability of the wet cakes was somewhat poor because water and diethyl ether were not fully soluble in each other). The thus-obtained wet cakes were further submitted three times to a process of washing under stirring with deionized water and collection by filtration under conditions of PPS/liquid = 1/5 (by weight) and stirring time of 30 minutes at 23°C. Thereafter, the recovered polymers were dried.

The properties of the polymers obtained in the respective examples are shown in Table 5.

Table 5

| | Washing before treatment | Acetic acid treatment in organic solvent/water mixture | | | Washing after treatment | Tmc (°C) | Degree of corrosion |
|---|---|---|---|---|---|---|---|
| | Liquid added/number of times of washing (PPS wet cake No.) | Weight ratio of organic solvent/water | Concentration of acetic acid (wt.%) | Weight ratio of PPS/liquid | Liquid added/ number of times of washing | | |
| Ex. 5-1 | Acetone/twice (PW-3) | Acetone/water 1/1 | 0.30 | 1/5 | Deionized water/ three times | 241 | B |
| Ex. 5-2 | | Acetone/water 1/4 | 0.30 | | | 242 | B |
| Ex. 5-3 | Methanol/twice (PW-7) | Methanol/water 1/1 | 0.30 | | | 240 | B |
| Ex. 5-4 | | Methanol/water 1/4 | 0.30 | | | 240 | B |
| Ex. 5-5 | NMP/twice (PW-8) | NMP/water 1/1 | 0.30 | | | 243 | B |
| Ex. 5-6 | | NMP/water 1/4 | 0.30 | | | 242 | B |
| Ex. 5-7 | Diethyl ether/ twice (PW-9) | Diethyl ether/ water 1/1 | 0.30 | | | 243 | B |
| Ex. 5-8 | | Diethyl ether/ water 1/4 | 0.30 | | | 242 | B |

As apparent from the results shown in Table 5, it is understood that when the organic acid treatment in the liquid mixture of organic solvent/water according to the present invention, in which various organic solvents not decomposing PPS are separately used in the liquid mixture, is performed on PPS which has been washed with its corresponding organic solvent (Examples 5-1 to 5-8), PPS can be provided as a polymer high in Tmc and low in corrosiveness.

Example 6 and Comparative Example 6:

A 500-ml Glass beaker was charged with 80 g of the PPS wet cake (PW-3) obtained in Referential Example 1. The amounts of water, acetone and acetic acid to be charged in the beaker were controlled in such a manner that a weight ratio of acetone to water was 1/4, a weight ratio of PPS to the liquid was 1/5, and a concentration of the organic acid was 0.30 wt.%. Under these conditions, the liquid mixture in the beaker was stirred at 23°C for 30 minutes to perform an organic acid treatment.

After the treatment, a PPS wet cake was collected by filtration. A portion of the thus-obtained wet cake was dried without washing to obtain a polymer of Comparative Example 6-1 (number of times of washing = 0). Portions of the collected PPS wet cake were respectively submitted once, twice and three times to a process of washing under stirring with deionized water and collection by filtration under conditions of PPS/liquid = 1/5 (by weight) and stirring time of 30 minutes at 23°C, and then dried to obtain a polymer of Comparative Example 6-2 (number of times of washing = 1), a polymer of Example 6-1 (number of times of washing = 2), and a polymer of Example 6-2 (number of times of washing = 3), respectively.

The properties of the polymers thus obtained are shown in Table 6.

Table 6

| | Washing before treatment Liquid added/ number of times of washing (PPS wet cake No.) | Acetic acid treatment in organic solvent/water mixture | | | Washing after treatment | Tmc (°C) | Degree of corro-sion | Amount of acetic acid in washings (ppm) |
|---|---|---|---|---|---|---|---|---|
| | | Weight ratio of acetone/ water | Concentration of acetic acid (wt.%) | Weight ratio of PPS/liquid | Number of times of washing with deionized water | | | |
| Comp. Ex. 6-1 | Acetone/twice (PW-3) | 1/4 | 0.30 | 1/5 | 0 | 213 | C | 2950 |
| Comp. Ex. 6-2 | | 1/4 | 0.30 | | 1 | 220 | C | 570 |
| Ex. 6-1 | | 1/4 | 0.30 | | 2 | 241 | B | 90 |
| Ex. 6-2 | | 1/4 | 0.30 | | 3 | 242 | B | ≤ 50 |

Note: The amount of acetic acid contained in washings was determined by gas chromatography. Incidentally, the amount of acetic acid in the case where the number of times of water washing was 0 was a value determined as to acetic acid in a filtrate obtained by the filtration after the organic acid treatment.

As apparent from the results shown in Table 6, it is understood that when the organic acid treatment in the liquid mixture of organic solvent/water according to the present invention is performed on PPS which has been washed with the organic solvent, and the thus-obtained polymer is then thoroughly washed (Example 6-1 or 6-2), PPS can be provided as a polymer high in Tmc and low in corrosiveness. On the other hand, when no or insufficient washing is performed after the organic acid treatment (Comparative Example 6-1 or 6-2), PPS can be only provided as a polymer low in Tmc and high in corrosiveness.

## Claims

1. A process for the production of a low-corrosive poly(arylene sulfide), which comprises subjecting a poly(arylene sulfide) to an organic acid treatment in a liquid mixture composed of an organic solvent and water in a weight ratio of organic solvent to water ranging from 4:1 to 1:10, and containing an organic acid in a concentration of 0.1-5.0 wt.%, and then thoroughly washing the thus-treated poly(arylene sulfide).

2. The process according to Claim 1, wherein the weight ratio of the organic solvent to water falls within a range of from 3:1 to 1:8.

3. The process according to Claim 1 or claim 2, wherein the organic solvent is a nitrogen-containing polar solvent, ketone solvent, ether solvent, halogenated hydrocarbon solvent, alcoholic or phenolic solvent, aromatic hydrocarbon solvent, sulfoxide solvent, or sulfone solvent, and is preferably N-methylpyrrolidone, acetone, diethyl ether, chloroform, methanol or ethanol.

4. The process according to any preceding Claim, wherein the concentration of the organic acid is 0.15-3.0 wt.%.

5. The process according to any preceding Claim, wherein the organic acid is a non-oxidizing organic acid selected from the group consisting of saturated fatty acids, unsaturated fatty acids, aromatic carboxylic acids, dicarboxylic acids and sulfonic acids, and is preferably acetic acid or formic acid.

6. The process according to any preceding Claim, wherein the poly(arylene sulfide) to be treated is a crude polymer obtained by a polymerization reaction of a poly(arylene sulfide).

7. The process according to any of Claims 1 to 5, wherein the poly(arylene sulfide) to be treated is in the form of a wet cake obtained by filtering a slurry containing a reaction mixture after completion of a polymerization reaction, or further washing and filtering the filter cake after the filtration.

8. The process according to any preceding Claim, wherein the poly(arylene sulfide) to be treated is a polymer obtained by reacting an alkali metal sulfide with a polyhalogenated aromatic compound in a polar organic solvent, from which at least 75 wt.% of an alkali metal salt secondarily formed upon the reaction has been removed after completion of the reaction.

9. The process according to Claim 8, wherein the alkali metal salt secondarily formed upon the reaction has been removed by subjecting the reaction mixture to sifting, centrifugation, washing with an organic solvent, washing with water or washing with a liquid mixture of an organic solvent and water after completion of the reaction.

10. The process according to any preceding Claim, wherein the poly(arylene sulfide) is a poly(phenylene sulfide).

11. The process according to any preceding Claim, wherein the organic acid treatment is performed by immersing the poly(arylene sulfide) in the organic solvent/water mixture containing the organic acid and stirring the liquid mixture at 0-50°C for 1 minute to 10 hours, preferably at 5-35°C for 5 minutes to 2 hours, more preferably at 10-30°C for 10 minutes to 1 hour.

12. The process according to any preceding Claim, wherein the poly(arylene sulfide) is subjected to the organic acid treatment, and then thoroughly washed until the concentration of the organic acid in a washing liquid after the washing is 500 ppm or less, preferably 400 ppm or less, more preferably 100 ppm or less.

13. The process according to any preceding Claim, wherein a solvent used in the washing after the organic

acid treatment is a solvent which has a boiling point of 150°C or lower, and neither decomposes nor oxidizes the poly(arylene sulfide), and is preferably water, acetone, methanol or ethanol.

**14.** A moulded or shaped article formed from a composition comprising the product of a process according to any preceding claim.

**15.** Use of the product of a process according to any of claims 1 to 13 in a composition for the production of a moulded or shaped article.

**16.** A process of making a moulded or shaped article according to claim 14 or a use according to claim 15 in which the composition comes into contact with metal components during processing.

**17.** An article according to claim 14, a use according to claim 15 or a process according to claim 16 in which the article produced also comprises metal components in contact with the moulded or formed polymeric material.